# EUROPEAN PATENT APPLICATION

(11) **EP 0 885 677 A2**
(43) Date of publication of application: **23.12.1998**
(21) Application number: 98110875.6
(22) Date of filing: 15.06.1998
(51) Int. Cl.: B23B 41/02

(54) **Deep-hole boring unit**

(30) Priority: 20.06.1997 IT VI970099
(71) Applicant: I.M.K.T. S.R.L., 36040 Brendola (Vicenza) (IT)
(72) Inventor: Broccardo, Doriano, 36100 - Vicenza (IT)
(74) Representative: Forattini, Amelia

(57) **Abstract**

A deep-hole boring unit, particularly applicable to a milling machine or a machining center, which includes a motorized spindle (2) for a deep-hole boring tool (3); the spindle (2) is independent of the cutterhead (T) of the milling machine and is mounted on a saddle (5) which can move parallel to the axis of the spindle along guides (6) rigidly coupled to the frame (I) of the machine, and supports (8, 11), for the deep-hole boring tool (3), anchored to the cutterhead (T) and/or to the frame (I) in order to reduce vibrations and increase boring precision and accuracy.

## Description

The present invention relates to a deep-hole boring unit, particularly applicable to a milling machine or to a machining center.

Deep-hole boring of metal parts is used often in moldmaking and is normally performed on specific machine tools which are different from those used for previous or subsequent machining.

Boring is in fact usually performed on specifically equipped boring machines, usually by means of conventional or straight-flute drills of considerable length. It is known that such drills have difficulty in expelling the machining chips, causing deviations from the boring axis and generating intense vibration during cutting, consequently breaking the tool.

A drawback of conventional deep-hole boring methods is constituted by the considerable downtimes required for dismounting, transferring and remounting the parts to be drilled on the specifically provided drilling machines or boring machines, with a consequent accumulation of geometry and/or dimension errors and with difficulty in meeting the required tolerances, unless multiple dimensional checks are performed, further increasing production times and costs.

Another drawback is constituted by the intense vibration generated by the axial and flexural stresses that act on very long drills, especially of the straight-flute type. This entails a considerable reduction in the maximum length of the tool and in its rotation rate in order to achieve acceptable dimensional precision and finish of desired quality.

The aim of the present invention is to overcome the above drawbacks by providing a deep-hole boring unit which can be applied to conventional milling machines or the like to perform boring cycles directly on a same machine used for other previous or subsequent machining.

A particular object of the invention is to considerably reduce machining times while maintaining very high precision and accuracy in machining the parts.

This aim and other objects which will become apparent hereinafter are achieved by a deep-hole boring unit, particularly applicable to a milling machine or machining center of the type which includes a frame which supports at least one cutterhead, characterized in that it includes a motorized spindle for a deep-hole boring drill, the spindle being mounted on a saddle which can move parallel to the axis of the spindle along a guiding means which can be anchored to the frame, and a tool guiding means for the boring tool which can be anchored to the machine tool on which it is installed, in order to reduce vibration and increase drilling precision.

The drilling unit according to the invention reduces machining times considerably with respect to conventional drills, allowing higher cutting speeds and very high precision and accuracy in machining.

Further characteristics and advantages of the invention will become apparent from the detailed description of the following preferred but not exclusive embodiment of the deep-hole boring unit according to the invention, illustrated only by way of non-limitative example in the accompanying drawings, wherein:

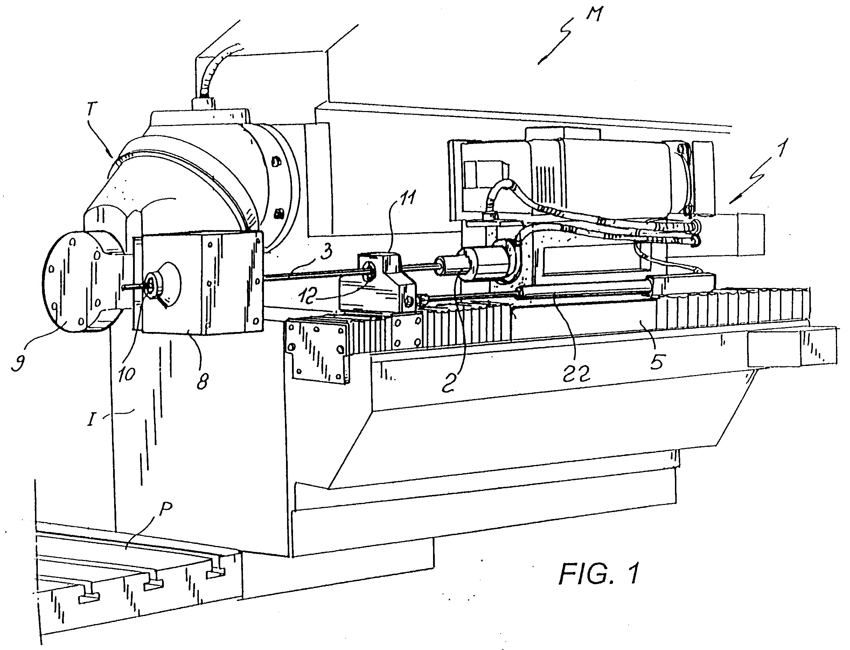

Fig. 1 is a perspective view of the boring unit according to the invention, applied to a universal milling machine;

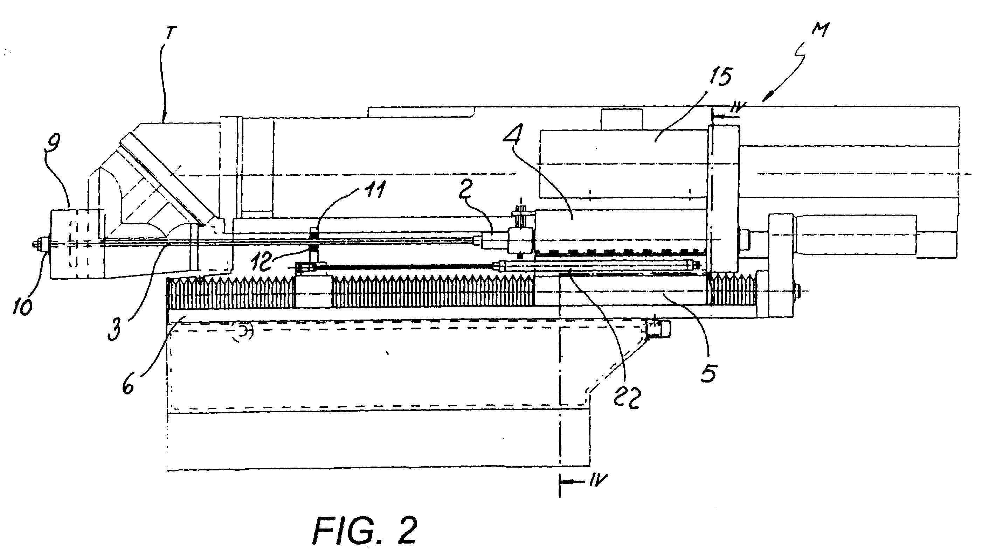

Fig. 2 is a schematic side view of the boring unit of Fig. 1;

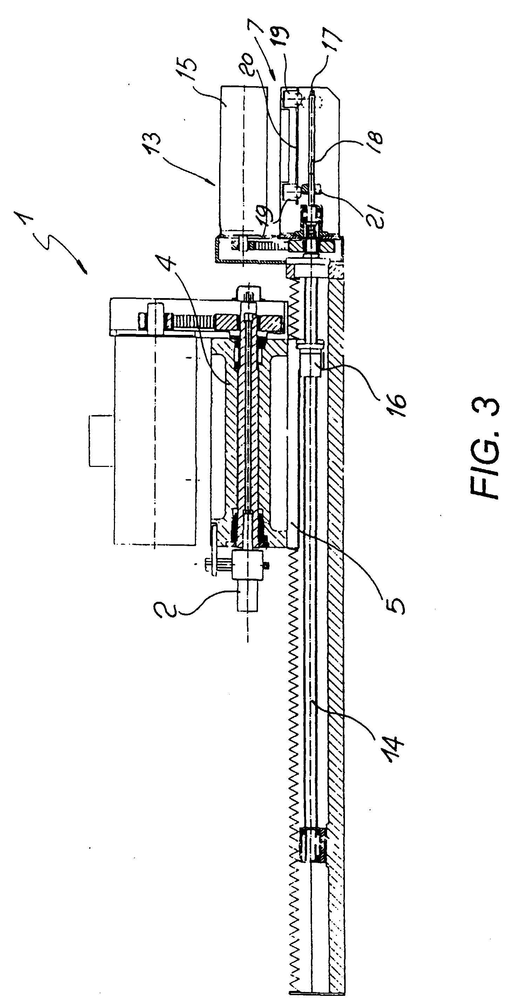

Fig. 3 is a partially sectional side view of a detail of the boring unit of Fig. 2;

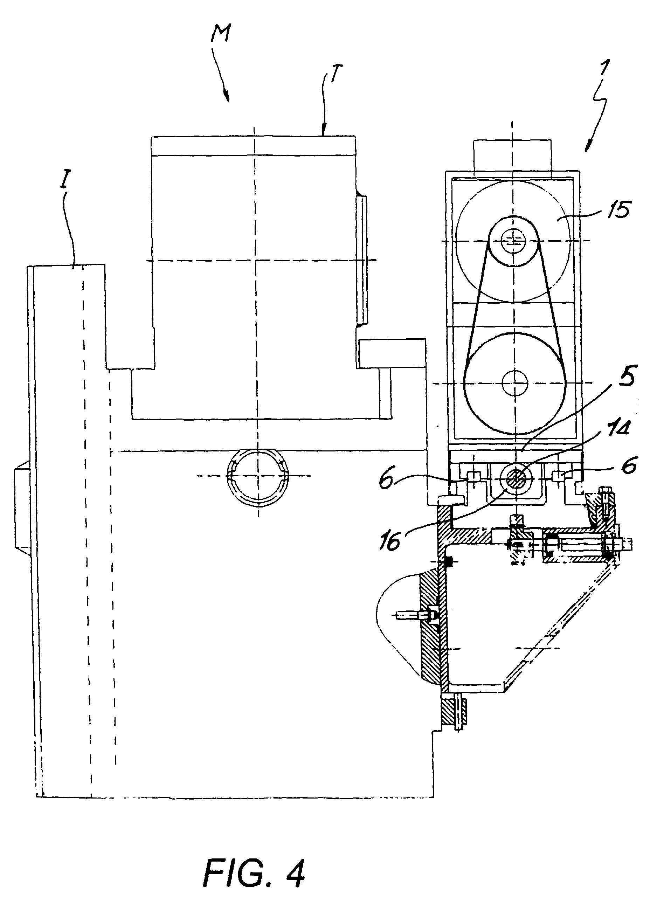

Fig. 4 is a sectional front view of the unit of Fig. 2, taken along the planes IV-IV;

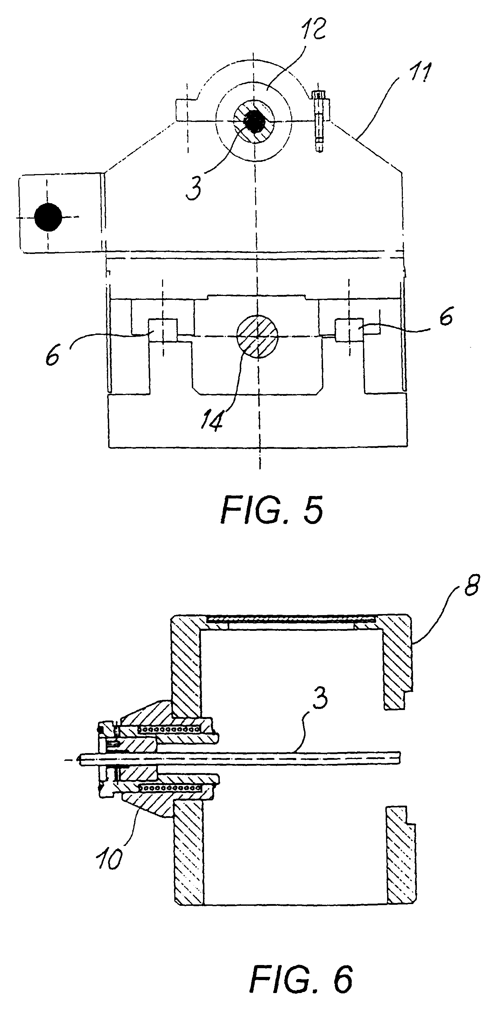

Fig. 5 is a partially sectional front view of a detail of the boring unit of Fig. 2;
Fig. 6 is a fully sectional side view of another detail of the boring unit of Fig. 2.

A deep-hole boring unit, generally designated by the reference numeral 1, is described with reference to the above figures.

The boring unit is applied to a universal machine tool M, particularly a milling machine of the type which includes a frame I which supports a worktable P which can move along one or more axes and a cutterhead T which can also be orientated along one or more axes.

According to the invention, the boring unit 1 generally includes a motorized spindle 2 which is preset for the mounting of a deep-hole boring drill 3 of the straight-flute type or the like, with a length of for example 1000 mm or more.

The spindle 2 is independent of the cutterhead and is rotatably accommodated in a sleeve 4 which is rigidly coupled to a saddle 5 which can move parallel to the axis of the spindle 2 along straight guides 6 which are rigidly coupled to the frame I.

The saddle 5 has a maximum stroke which is preset by virtue of a stroke limiting means, generally designated by the reference numeral 7 and associated with the advancement means, which will be described in detail hereinafter.

According to the invention, there is a tool guiding means which includes a first support 8 with an end tang 9 which can be detachably coupled to the cutterhead T and lies in a substantially radial direction with respect to the cutterhead. At the end of the support 8 that lies opposite to the end provided with the tang 9 there is a first guiding bush 10 for the outermost portion of the boring tool 3. By means of this bush, it is possible to substantially reduce the extent of the vibration induced by axial and flexural stresses on the drill, considerably improving machining quality.

The tool guiding means also includes a second support 11, which can move longitudinally with respect to the saddle 5 along the straight guides 6 on which the saddle 5 also slides and has a second guiding bush 12 which is meant to guide and support the intermediate portion of the boring tool 3. By virtue of this second bush it is possible to reduce the free bending length by doubling the frequency of the vibrations, thus further improving the precision of the machining and its surface finish.

Conveniently, there is a first actuation means 13 which is rigidly coupled to the frame I and acts on the saddle 5 to impart thereto a longitudinal translatory motion along the straight guides 6 and accordingly produce an advancement of the spindle 2.

In particular, the first actuation means 13 includes a lead screw 14, actuated by a motor 15 fixed to the frame I, on which a lead screw nut 16 engages which is rigidly coupled to the saddle 5. The mechanism can also be actuated manually by using a coupling 17 for a crank or a lever or the like at one end of a threaded shaft 18 which is coupled to the lead screw 14.

The stroke limiting means 7 is constituted by two microswitches 19 which are arranged on a guide 20 in adjustable positions and interact with a threaded ring 21 which is fitted on the threaded shaft 18.

Likewise, there is a second actuation means 22, constituted for example by a hydraulic, pneumatic or electric jack, which is rigidly coupled to the saddle 5 and acts on the second support 11 in order to impart thereto a translatory motion with respect to the saddle 5 along the same straight guides 6 on which the saddle slides.

The unit includes an automatic control means, which is not shown in the drawings and is within the grasp of any expert in the field, which can be interfaced with the main control unit of the machine in order to position the part and the cutterhead T and therefore the first tool guiding support 8 with respect to the spindle 2.

The control means is connected to the second actuation means 22 in order to control its movement and to position the second support 11 in the point of maximum bending of the tool 3 during the advancement of the spindle 2. The control means is furthermore connected to the first actuation means 13 in order to control the advancement of the spindle 2 according to a preset rule.

This configuration allows to use considerably longer tools than in the past, to form deeper holes which are very precise and have an excellent quality of finish.

From the above description it is evident that the deep-hole boring unit according to the invention, applied to a machine tool, allows to perform boring continuously with other machining operations without having to dismount the part. Accordingly, machining times are reduced considerably with respect to boring cycles performed with drills or similar machines.

The deep-hole boring unit according to the invention is susceptible of numerous modifications and variations which are within the scope of the inventive concept expressed by the accompanying claims. All the details may be replaced with technical equivalents without abandoning the scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Deep-hole boring unit, particularly applicable to a universal machine tool, such as a milling machine or a machining center which comprises a frame (I) which supports at least one cutterhead (T), said unit being characterized in that it comprises a motorized spindle (2) for a deep-hole boring drill (3), said spindle (2) being mounted on a saddle (5) which can move parallel to the rotation axis of the spindle along a guiding means (6) which can be anchored to the frame (I) of the machine to which the unit is applied, and a tool guiding means (8, 11) for said deep-hole boring drill (3) which can be anchored to the cutterhead (T) and/or to the frame (I) of said machine in order to reduce vibrations and increase its boring precision.

2. Deep-hole boring unit according to claim 1, characterized in that said tool guiding means (8, 11) comprises a first support (8) with a coupling tang (9) which is shaped so as to detachably couple to said cutterhead (T) in a direction which is substantially radial to said cutterhead.

3. Deep-hole boring unit according to claim 1, characterized in that said first support (8) has a first bush (10) for guiding and supporting the outermost portion of said deep-hole boring drill (3).

4. Deep-hole boring unit according to claim 1, characterized in that said tool guiding means (8, 11) comprises a second support (11) which can move longitudinally along said guiding means (6) with respect to said saddle (5).

5. Deep-hole boring unit according to claim 1, characterized in that said second support (11) has a second bush (12) for guiding and supporting the intermediate portion of said deep-hole boring drill (3).

6. Deep-hole boring unit according to claim 1, characterized in that it has a first actuation means (13) which acts on said saddle (5) in order to impart a longitudinal motion along said guiding means (6) to said saddle and an advancement motion to said spindle (2).

7. Deep-hole boring unit according to claim 1, characterized in that it has a second actuation means (22) which acts on said second support (11) in order to make said second support perform a translatory motion along said guiding means (6).

8. Deep-hole boring unit according to claim 1, characterized in that it has a control means which is connected to said second actuation means (22) in order to automatically control their movement and position said second support (11) in the point of maximum bending of said tool (3) during the advancement of said spindle (2).

9. Deep-hole boring unit according to claim 8, characterized in that said control means is connected to said first actuation means (13) in order to control the advancement of said spindle (2) according to a preset rule.

10. Deep-hole boring unit according to claim 1, characterized in that said control means can be interfaced with the main control unit of the milling machine in order to determine the positioning of the cutterhead (T) with respect to said spindle (2).

11. Deep-hole boring unit according to claim 1, characterized in that it has a stroke limiting means (7, 19, 20, 21) which can be adjusted in order to determine the maximum stroke of said saddle (5) along said guiding means (6).

12. Deep-hole boring unit according to one or more of the preceding claims, characterized in that said first actuation means (13) comprises a lead screw (14) which is actuated by a motor (15) on which a lead screw nut (16) rigidly coupled to said saddle (5) engages.

13. Deep-hole boring unit according to claim 1, characterized in that said spindle (2) is mounted laterally to the frame (I) of said machine with a substantially horizontal axis.
